# EUROPÄISCHE PATENTANMELDUNG

(11) **EP 2 073 181 A1**
(43) Veröffentlichungstag der Anmeldung: **24.06.2009**
(21) Anmeldenummer: 08450196.4
(22) Anmeldetag: 17.12.2008
(51) Int. Cl.: G08B 25/10, G08B 27/00, H04B 1/50

(54) **Verfahren zum Übermitteln eines Datenpakets auf einer erster Frequenz und einer Bestätigung auf einer davon verschiedenen Frequenz**

(30) Priorität: 19.12.2007 AT 20672007
(71) Anmelder: Center Communication Systems GmbH, 1210 Wien (AT)
(72) Erfinder: Freitag, Erich, 1190 Wien (AT)
(74) Vertreter: Miksovsky, Alexander

(57) **Zusammenfassung**

Bei einem Verfahren zum Erstellen und Versenden wenigstens eines Datenpakets, insbesondere Alarmierungspakets, zwischen einer zentralen Stelle (11) und einer Mehrzahl von damit über Funkverbindungen kommunizierenden Nebenstellen (12) unter Einsatz eines mehrlagigen bzw. -schichtigen Modells, wobei in einer Funkverbindungsschicht (2) das wenigstens eine zu übermittelnde Datenpaket in einem Rahmen (6) mit zusätzlichen Daten, wie Typ, Protokoll ID, Sequenzzähler, Zieladresse und Quelladresse eingebettet wird, ist vorgesehen, daß eine Übermittlung des Datenpakets in dem Rahmen (6) auf einer ersten Frequenz (fa) erfolgt, während eine Bestätigung bzw. Mitteilung von der (den) Nebenstelle(n) zu der zentralen Stelle auf einer von der ersten Frequenz verschiedenen Frequenz (fb) erfolgt.

Darüber hinaus wird eine Verwendung eines derartigen Verfahrens im Zusammenhang mit einer Übermittlung von Datenpaketen für Alarmierungseinsätze, Rettungseinsätze etc., insbesondere zur Aufrechterhaltung der öffentlichen Ordnung und Sicherheit vorgeschlagen.

## Beschreibung

Die vorliegende Erfindung bezieht sich auf ein Verfahren zum Erstellen und Versenden wenigstens eines Datenpakets, insbesondere Alarmierungspakets, zwischen einer zentralen Stelle und einer Mehrzahl von damit über Funkverbindungen kommunizierenden Nebenstellen unter Einsatz eines mehrlagigen bzw. -schichtigen Modells, wobei in einer Funkverbindungsschicht das wenigstens eine zu übermittelnde Datenpaket in einem Rahmen mit zusätzlichen Daten, wie Typ, Protokoll ID, Sequenzzähler, Zieladresse und Quelladresse eingebettet wird. Die Erfindung bezieht sich darüber hinaus auf eine Verwendung eines derartigen Verfahrens.

Ein Verfahren dieser Art ist beispielsweise der WO 02/13440 zu entnehmen, wobei darauf abgezielt wird, in einem Rahmen wenigstens einen Empfänger eines Datenpakets zu bezeichnen und zu einer Antwort bzw. Empfangsbestätigung aufzufordern.

Im Zusammenhang mit einer Übermittlung von Datenpaketen, insbesondere Alarmierungspaketen, zwischen einer zentralen Stelle und einer Mehrzahl von damit über Funkverbindungen kommunizierenden Nebenstellen ist einerseits eine rasche Erstellung derartiger Datenpakete bzw. Nachrichten und Übermittlung derselben an die Nebenstellen erforderlich, wobei darüber hinaus wichtig ist, daß eine definitive und zuverlässige Auswahl der zu versendenden Nachrichten bzw. Datenpakete an eine gegebenenfalls vorzunehmende Auswahl von Nebenstellen vorgenommen wird. Neben einer entsprechend sicheren Weiterleitung derartiger Datenpakete ist darüber hinaus eine zuverlässige Rückmeldung betreffend den vollständigen Erhalt und die Kenntnisnahme eines derartigen Datenpakets bzw. einer darin enthaltenen Nachricht gegebenenfalls von besonderem Interesse. Im Zusammenhang mit einem Einsatz eines derartigen Verfahrens betreffend Alarmierungen muß darüber hinaus eine entsprechend rasche und zuverlässige Erstellung, Weiterleitung und der Erhalt einer Rückmeldung sichergestellt werden. Während mehrschichtige bzw. mehrlagige Modelle allgemein bekannt sind, ist für eine rasche und ordnungsgemäße Zuordnung eine entsprechende Aufbereitung der zu versendenden Daten bzw. Datenpakete wichtig.

Im Zusammenhang mit dem obengenannten Verfahren wird erfindungsgemäß darauf abgezielt, ein derartiges Verfahren dahingehend weiterzubilden, daß trotz einer entsprechenden Aufbereitung der zu übertragenden Nachrichten als auch der damit zu koppelnden Daten eine rasche und zuverlässige Erstellung und Übermittlung der Daten als auch eine einfache und ebenso rasche sowie zuverlässige Rückmeldung betreffend den Erhalt einer derartigen Mitteilung bzw. eines derartigen Datenpakets möglich wird.

Zur Lösung dieser Aufgaben ist das Verfahren der eingangs genannten Art im wesentlichen dadurch gekennzeichnet, daß eine Übermittlung des Datenpakets in dem Rahmen auf einer ersten Frequenz erfolgt, während eine Bestätigung bzw. Mitteilung von der (den) Nebenstelle(n) zu der zentralen Stelle auf einer von der ersten Frequenz verschiedenen Frequenz erfolgt. Da das wenigstens eine zu übermittelnde Datenpaket in einem Rahmen mit zusätzlichen Daten, wie Typ, Protokoll ID, Sequenzzähler, Zieladresse und Quelladresse eingebettet wird, wird sichergestellt, daß eine zuverlässige und eindeutige Zuordnung zu dem bzw. den gewünschten Empfänger(n) leicht und rasch möglich wird, wobei mit einem entsprechend einfachen und sicheren Aufbau der insgesamt zu übermittelnden Daten und somit einer einfachen und zuverlässigen Positionierung auf bzw. Einbettung in einem entsprechenden Rahmen das Auslangen gefunden werden kann. Es wird somit ein entsprechendes, zu übertragendes Paket in einen Rahmen einer Funkverbindungsschicht eingebettet und durch eine Sendestation abgesandt, worauf der bzw. die Empfänger die die gesamte Nachricht bildenden Bytes des gesamte Rahmens empfängt (empfangen) und sie entsprechend für eine weitere Verarbeitung aufbereitet (aufbereiten). Durch Aufnahme einer Zieladresse wird insbesondere möglich, daß von der zentralen Stelle sämtliche Nachrichten ohne vorhergehende spezielle Zuordnung zu den mit der zentralen Stelle über Funkverbindungen kommunizierenden Nebenstellen gesandt werden können, worauf nach Erhalt der Nachrichten aus den zusätzlichen Daten die Zieladresse bzw. die Zieladressen erkannt werden kann (können) und lediglich durch die durch die Zieladresse bzw. Zieladressen bezeichneten Empfänger eine weitere Bearbeitung vorgenommen wird. Es kann somit der Empfänger unmittelbar entscheiden bzw. erkennen, ob er ein gewünschter bzw. beabsichtigter Empfänger ist oder nicht. Durch Angabe von Ziel- und Quelladressen kann somit auch eine gleichzeitige Übermittlung an mehrere Empfänger bzw. Adressen vorgenommen werden. Da darüber hinaus erfindungsgemäß vorgeschlagen wird, daß eine Übermittlung des Datenpakets in dem Rahmen auf einer ersten Frequenz erfolgt, während eine Bestätigung bzw. Mitteilung von der (den) Nebenstelle(n) zu der zentralen Stelle auf einer von der ersten Frequenz verschiedenen Frequenz erfolgt, wird es möglich, eine Verbindung zwischen der zentralen Stelle und der Mehrzahl von Nebenstellen in Form eines Semi-Duplex-Verfahrens aufzubauen. Hiebei verwendet eine Übertragung von der zentralen Stelle bzw. eines Edge-Routers der zentralen Stelle zu den Nebenstellen eine erste Frequenz, während für die Rückübermittlung bzw. Empfangsbestätigung von der (den) Nebenstelle(n) eine davon verschiedene, zweite Frequenz verwendet wird, so daß es möglich ist, im wesentlichen gleichzeitig und unabhängig von einer Übermittlung von Daten von der zentralen Stelle an die Nebenstelle(n) von diesen nach Erhalt von Nachrichten bzw. Datenpaketen eine Empfangsbestätigung zu erhalten.

Die weiteren zusätzlichen Daten erlauben darüber hinaus ebenfalls eine rasche und zuverlässige Erstellung und Übermittlung der Daten sowie ein einfaches Erkennen der Zuständigkeit wenigstens eines Empfängers.

Für eine einfache und zuverlässige Aufbereitung und Erstellung der zu versendenden Daten bzw. Nachrichten wird gemäß einer bevorzugten Ausführungsform vorgeschlagen, daß das zu übermittelnde Datenpaket von einer vorangehenden Schicht für eine physikalische Datenübertragung zur Verfügung gestellt wird. Je nach Implementierung der einzelnen Schichten bzw. Lagen können zusätzliche Zwischenlagen erforderlich sein, um die Aufbereitung der Daten in der in einem mehrlagigen Aufbau üblicherweise eine zweite Lage bzw. Schicht darstellenden Funkverbindungsschicht zu ermöglichen. Für die physikalische Datenübertragung kann ein standardmäßiges Modem eingesetzt werden, welches im wesentlichen ein beliebiges Modem mit entsprechend angepaßtem Modulationsverfahren sein kann. Die Auswahl derartiger Geräte bzw. Verfahren für die vorangehende Schicht für eine physikalische Datenübertragung richtet sich beispielsweise nach Eigenschaften der Funkverbindung bzw. Funkstrecke und der darin verwendeten Geräte, Bandbreiten etc.

Gemäß einer bevorzugten Ausführungsform des erfindungsgemäßen Verfahrens wird darüber hinaus vorgeschlagen, daß das in den Rahmen eingebettete Datenpaket gemeinsam mit den Zusatzdaten entsprechend der Protokoll ID einer nachfolgenden Schicht zur Übertragung an mit der zentrale Stelle kommunizierende Nebenstellen weitergeleitet wird. Es wird somit durch das erfindungsgemäße Verfahren ein Framing bzw. Rahmen für zu versendende Datenpakete bzw. IP-Pakete zur Verfügung gestellt, wobei beispielsweise für die auf die Einbettung in einem Rahmen nachfolgende Lage bzw. Schicht ein standardmäßiges Internet-Protokoll (IP) eingesetzt werden kann.

Wie oben bereits angeführt, ist insbesondere bei einer Übermittlung von Alarmierungspaketen wichtig, eine zuverlässige Rückmeldung zu erhalten, wobei eine derartige Rückmeldung bzw. Empfangsbestätigung automatisch vorgesehen sein kann. Alternativ und gemäß einem bevorzugten Verfahren wird erfindungsgemäß vorgeschlagen, daß von den Nebenstellen eine Empfangsbestätigung nach Erhalt eines in einem Rahmen eingebetteten Datenpakets gefordert wird. Auf eine derartige explizite Anforderung einer Rückmeldung bzw. Empfangsbestätigung kann insbesondere für den Fall, daß im wesentlichen allgemeine Nachrichten versandt werden und somit eine jeweils einzelne Rückmeldung einer gegebenenfalls großen Anzahl von Nebenstellen anfallen würde, verzichtet werden. Für den Fall, daß Empfangsbestätigungen nicht bzw. nicht von jeder Nebenstelle erforderlich sein sollten, läßt sich somit der Umfang der insgesamt zu übermittelnden Daten durch eine entsprechende Verkleinerung bzw. Verringerung der im Rahmen zusätzlich enthaltenen Daten erzielen.

Im Zusammenhang mit einer raschen und zuverlässigen Überprüfung des ordnungsgemäßen Empfangs der übermittelten bzw. übersandten Daten wird gemäß einer weiters bevorzugten Ausführungsform vorgeschlagen, daß das wenigstens eine Datenpaket an sämtliche mit der zentralen Stelle kommunizierende Nebenstellen versandt wird und entsprechend der im Rahmen angegebenen Zieladresse lediglich die durch die Zieladresse bestimmte Nebenstelle eine Empfangsbestätigung an die zentrale Stelle retourniert oder von dieser angefordert wird. Derart kann über die im Rahmen enthaltenen, zusätzlichen Daten eine zuverlässige Auswahl der empfangenden Station bzw. Stationen bzw. Nebenstellen und eine Aufforderung derselben zur Abgabe einer ordnungsgemäßen Rückmeldung vorgenommen werden.

Weiters ist es möglich, sowohl die Übertragung von Nachrichten bzw. Datenpaketen von der zentralen Stelle zu den über Funkverbindungen damit kommunizierenden Nebenstellen als auch den Empfang bzw. die Rückmeldung auf derselben Frequenz durchzuführen, wobei in diesem Fall vorgesehen sein muß, daß für den Empfang bzw. Erhalt der Rückmeldungen bzw. Empfangsbestätigungen entsprechende Zeitfenster zur Verfügung gestellt werden, in welchen eine Übermittlung bzw. Absendung von Daten von der zentralen Stelle nicht erfolgt.

Für eine Überprüfung der ordnungsgemäßen Übermittlung von Daten sowie eine Zuordnung von Empfangsbestätigungen wird gemäß einer weiters bevorzugten Ausführungsform vorgeschlagen, daß für die Abgabe einer Empfangsbestätigung durch die durch die Zieladresse bestimmte Nebenstelle eine Verzögerungszeit für die Absendung der Empfangsbestätigung nach Erhalt des das Datenpaket enthaltenden Rahmens eingestellt wird. Eine derartige Verzögerungszeit kann im wesentlichen beliebig gewählt werden und stellt sicher, daß beispielsweise nach ungenütztem Ablauf der Verzögerungszeit bzw. für den Fall, daß innerhalb der Verzögerungszeit und einer für die Übertragung gegebenenfalls erforderlichen, zusätzlichen Zeit keine Empfangsbestätigung bzw. Rückmeldung eingelangt ist, eine Nachricht vorsorglich neuerlich an die Nebenstelle bzw. Nebenstellen gesandt wird, wobei in diesem Zusammenhang somit bevorzugt vorgeschlagen wird, daß bei Nichteinlangen einer Empfangsbestätigung von einer Nebenstelle in einem vorgegebenen Zeitraum eine neuerliche Übermittlung des in einem Rahmen eingebetteten Datenpakets an diese Nebenstelle vorgenommen wird.

Zur weiteren Erhöhung der Sicherheit der zuverlässigen und vollständigen Übertragung von Nachrichten bzw. Datenpaketen zwischen der zentralen Stelle und der Mehrzahl von Nebenstellen wird darüber hinaus vorgeschlagen, daß eine Übermittlung eines weiteren, in einen Rahmen eingebetteten Datenpakets für eine durch die Zieladresse bestimmte Nebenstelle erst nach Erhalt einer Empfangsbestätigung einer vorangehenden Übermittlung eines in einem Rahmen eingebetteten Datenpakets vorgenommen wird, wie dies einer weiters bevorzugten Ausbildung des erfindungsgemäßen Verfahrens entspricht. Derart kann sichergestellt werden, daß nicht Nachrichten bei einzelnen Nebenstellen unberücksichtigt bleiben, so daß beispielsweise, wie oben angeführt, nach ungenütztem Verstreichen der für den Erhalt der Rückmeldung eingestellten Verzögerungszeit eine Nachricht neuerlich bzw. mehrmals wiederholt wird und auf eine entsprechende Empfangsbestätigung gewartet wird, bevor weitere Nachrichten an diese Nebenstelle übermittelt werden. Somit kann sichergestellt bzw. überprüft werden, daß bzw. ob bei einer Übermittlung einer Vielzahl von aufeinander folgenden und gegebenenfalls voneinander abhängigen Nachrichten bzw. Datenpaketen die gesamte Kette an Nachrichten zuverlässig von der Nebenstelle empfangen wurde.

Im Zusammenhang mit der Überprüfung des Betriebszustands der Mehrzahl von Nebenstellen kann insbesondere unabhängig von der Übermittlung von Nachrichten bzw. Datenpaketen gemäß einer weiteren bevorzugten Ausführungsform des erfindungsgemäßen Verfahrens vorgesehen sein, daß eine Statusanfrage von der zentralen Stelle an die damit kommunizierenden Nebenstellen gesandt wird. Eine derartige Statusabfrage kann periodisch vorgenommen werden, so daß unabhängig von zu versendenden Datenpaketen, insbesondere Alarmierungspaketen, jeweils die zentrale Stelle eine zuverlässige Mitteilung betreffend den Status und insbesondere die korrekte Funktionsweise sämtlicher Nebenstellen erhält oder anfordern kann.

Betreffend das erfindungsgemäße Verfahren wird darüber hinaus gemäß der vorliegenden Erfindung eine Verwendung dieses Verfahrens im Zusammenhang mit einer Übermittlung von Datenpaketen für Alarmierungseinsätze, Rettungseinsätze etc., insbesondere zur Aufrechterhaltung der öffentlichen Ordnung und Sicherheit, vorgeschlagen.

Die Erfindung wird nachfolgend anhand von in der beiliegenden Zeichnung schematisch dargestellten Ausführungsbeispielen näher erläutert. In dieser zeigen:
Fig. 1 eine schematische Darstellung eines mehrlagigen bzw. mehrschichtigen Modells, welches im erfindungsgemäßen Verfahren zum Einsatz gelangt;
Fig. 2 eine schematische Darstellung des im Rahmen des erfindungsgemäßen Verfahrens erstellten Rahmens des zu übersendenden, wenigstens einen Datenpakets mit zusätzlichen Daten; und
Fig. 3 eine schematische Darstellung des zeitlichen Ablaufs der Übermittlung von Daten von der zentralen Stelle zu Nebenstellen unter Einsatz des erfindungsgemäßen Verfahrens.

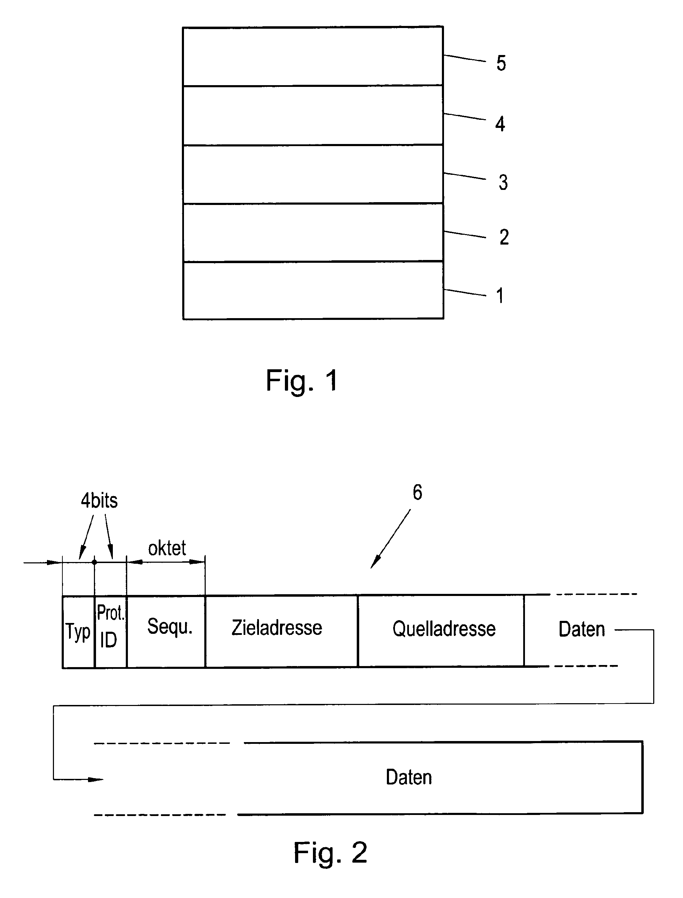

In Fig. 1 ist schematisch ein mehrlagiges bzw. mehrschichtiges Modell beschrieben, wobei in einer Schicht bzw. Lage 1 beispielsweise über ein standardmäßiges Modem eine physikalische Datenübertragung vorgenommen wird. In dieser Schicht 1 können im wesentlichen ein beliebiges Modem und Modulationsverfahren eingesetzt werden, wobei die Auswahl der darin eingesetzten Geräte bzw. Verfahren beispielsweise auf Basis der Eigenschaften der Funkstrecke bzw. Funkverbindung zwischen der zentralen Stelle und der Mehrzahl von Nebenstellen, beispielsweise im Hinblick auf Geräte, Bandbreiten etc., erfolgt.

In der nachfolgenden Schicht bzw. Lage 2 erfolgt im Zusammenhang mit dem erfindungsgemäßen Verfahren eine Einbettung des wenigstens einen zu übermittelnden Datenpakets in einen Rahmen mit zusätzlichen Daten, wie dies nachfolgend insbesondere unter Bezugnahme auf Fig. 2 noch im Detail erörtert werden wird. In dieser für eine Funkverbindung vorliegenden bzw. zuständigen Schicht bzw. Lage 2 erfolgt somit eine Bereitstellung bzw. Aufbereitung der Daten bzw. von zuständigen, weiteren Services für eine nachfolgende Schicht bzw. Lage 3 im Sinne einer Erstellung eines Rahmens für IP-Pakete.

Die Übermittlung der Daten aus der vorangehenden Schicht bzw. Lage 1 kann darüber hinaus gegebenenfalls die Implementierung von weiteren, nicht näher dargestellten Zwischenlagen erfordern, wenn beispielsweise im Zusammenhang mit der Lage bzw. Schicht 1 ein Bus eingesetzt wird.

In der Lage bzw. Schicht 3 wird beispielsweise ein standardmäßiges Internet-Protokoll (IP) eingesetzt.

In der nachfolgenden Schicht bzw. Lage 4 wird beispielsweise ein ebenfalls standardmäßiges UDP-Protokoll (User Datagram Protocol) eingesetzt.

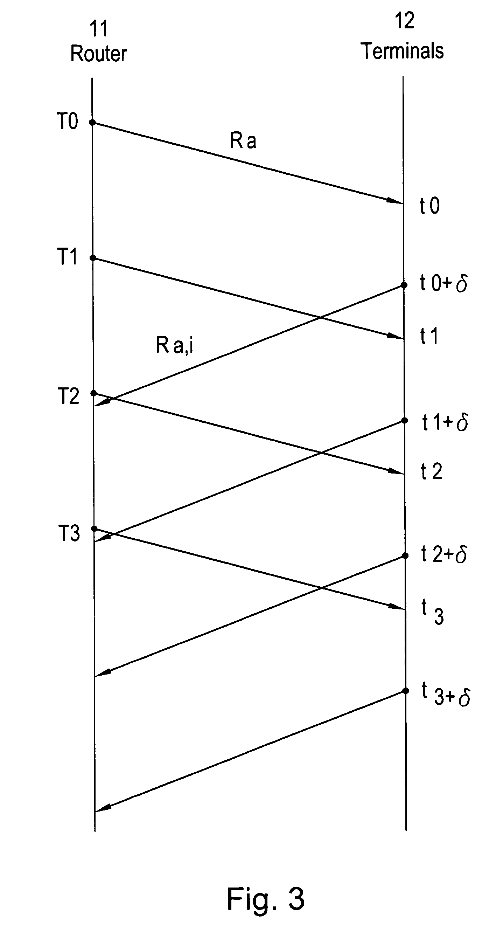

Für die abschließende Lage bzw. Schicht 5 wird ein einem RPC (Remote Procedure Call) ähnlicher Mechanismus eingesetzt, wobei über die Lage bzw. Schicht 5 die eigentlichen Informationsinhalte ausgetauscht werden, wobei auf die Übermittlung von Daten bzw. Inhalten im Detail insbesondere unter Bezugnahme auf Fig. 3 näher eingegangen werden wird.

Im Rahmen des erfindungsgemäßen Verfahrens erfolgt in der für eine Funkverbindung zuständigen Schicht bzw. Lage 2 eine Einbettung der zu übermittelnden Daten bzw. des Datenpakets in einen entsprechenden Rahmen 6, wobei aus der Darstellung gemäß Fig. 2 ersichtlich ist, daß insbesondere den zu übermittelnden Daten vorgeschaltet in dem Rahmen zusätzliche Daten beispielsweise betreffend Typ, Protokoll ID, Sequenzzähler, Zieladresse und Quelladresse vorgesehen bzw. eingebettet sind.

Die den Typ betreffenden Daten bezeichnen die Art des Rahmens bzw. RLL-Rahmens (Radio Link Layer bzw. Funkverbindungsschicht), wobei die den Typ betreffenden Daten in der Größe von beispielsweise 4 Bits im Zusammenhang mit der Übermittlung und dem Erhalt einer Empfangsbestätigung bei einer Übertragung von Alarmpaketen eingesetzt werden.

Die die Protokoll ID betreffenden Daten können ebenfalls eine Größe von 4 Bits aufweisen und werden insbesondere verwendet, um die weitere Be- bzw. Verarbeitung in der nachfolgenden Schicht 3 näher zu definieren.

Der Sequenzzähler ermöglicht eine interne Zählung und kann beispielsweise die Größe eines Oktets aufweisen.

Die Daten betreffend die Zieladresse bzw. Zieladressen sowie die Quelladresse können entsprechend dem Einsatz eine vorgegebene und definierte Länge aufweisen, wobei die Länge beispielsweise auf 4 Oktets beschränkt ist.

Das gemäß Fig. 2 daran anschließende Datensegment kann eine gegebenenfalls beschränkte Größe aufweisen.

Nachfolgend auf die Vorbereitung des derart in der Schicht bzw. Lage 2 erstellten Rahmens 6 gemäß der Darstellung von Fig. 2 erfolgt eine Übermittlung der Nachrichten bzw. Datenpakete, insbesondere Alarmnachrichten, an die Mehrzahl von mit der zentralen Stelle über Funkverbindungen verbundenen Nebenstellen bzw. Terminals in einem entsprechenden Überdeckungsbereich bzw. einer Zelle der zentralen Stelle, wobei nach der Übertragung von Nachrichten beispielsweise auch Empfangsbestätigungen von den Nebenstellen angefordert werden, um den sicheren Erhalt der zu übertragenden Nachrichten sowie die Vollständigkeit der zu übertragenden Daten bzw. Nachrichten zu überprüfen. Hiebei wird, wie bereits mehrfach ausgeführt, neben einer zuverlässigen Übersendung der Nachrichten bzw. Datenpakete auch darauf abgezielt, die Verbindung und Übermittlung der Daten zwischen der zentralen Stelle und der Vielzahl von Nebenstellen in möglichst kurzer Zeit durchzuführen.

Ein Modell einer Übertragung zwischen der zentralen Stelle 11, welche in Fig. 3 auf der linken Seite als Router bezeichnet ist, und einer Mehrzahl von Nebenstellen 12, welche in Fig. 3 als Terminals auf der rechten Seite bezeichnet sind, erfolgt bei der in Fig. 3 dargestellten Ausführungsform im Rahmen eines Semi-Duplex-Verfahrens, wobei eine Übertragung von der zentralen Stelle bzw. dem Router 11 zu den Nebenstellen bzw. den Terminals 12 unter Verwendung einer ersten Frequenz fa erfolgt, während eine Rückantwort bzw. Empfangsbestätigung, welche von dem (den) Terminal(s) gefordert wird, unter Verwendung einer zweiten, von der ersten Frequenz unterschiedlichen Frequenz fb erfolgt.

Auf Basis des in Fig. 3 dargestellten Zeitdiagramms erfolgt eine Übertragung von Nachrichten, welche gemäß Fig. 2 mit zusätzlichen Daten gekoppelt bzw. in einen Rahmen 6 eingebettet worden sind, ausgehend von einem Zeitpunkt T0 als eine Botschaft bzw. Alarmnachricht Ma, welche in weiterer Folge beispielsweise zu einer Zeit t0 bei einer Mehrzahl von Empfangsstationen bzw. Nebenstellen oder Terminals empfangen wird.

Die zum Zeitpunkt T0 gesandte Nachricht Ma wird von sämtlichen Stationen bzw. Alarmnebenstellen 12 im Überdeckungsbereich der zentralen Stelle bzw. des Routers 11 empfangen und die einzelnen Stationen bzw. Nebenstellen 12 bereiten ihre Antworten Ra,i vor, welche zu einer Zeit t0+δ gesandt werden.

Im Zusammenhang mit Fig. 3 ist hiebei ersichtlich, daß eine Verzögerungszeit bzw. ein Verzögerungsparameter δ vorgesehen wird, um sicherzustellen, daß für den Erhalt und die Absendung einer Empfangsbestätigung durch die Nebenstellen bzw. Anschlüsse 12 ein vorgegebener Zeitrahmen zur Verfügung gestellt wird.

Unter Berücksichtigung der Tatsache, daß die Übermittlung der Nachrichten Ma auf einer ersten Frequenz fa erfolgt und eine Rückübermittlung von Antworten bzw. Empfangsbestätigungen auf einer zweiten Frequenz fb erfolgt, ist es möglich, daß von dem Router bzw. der zentralen Stelle 11 unabhängig von dem Erhalt der Antworten weitere Nachrichten gesandt werden und somit im wesentlichen gleichzeitig Nachrichten und Empfangsbestätigungen ohne gegenseitige Beeinträchtigung gesandt werden können.

Unter Berücksichtigung des Verzögerungsparameters bzw. der Verzögerungszeit δ wird darüber hinaus sichergestellt, daß ein bei Übermittlung mehrerer Nachrichten erforderliches Anfrageintervall ausreichend lang gemacht wird, um den Erhalt der Antwort der betreffenden Nebenstelle 12 sicherzustellen, so daß ein Überlappen von Übermittlungen von Nachrichten von der zentralen Stelle bzw. dem Router 11 zu einzelnen Anschlüssen bzw. Terminals 12 nicht auftritt.

Es kann darüber hinaus vorgesehen sein, daß nach Verstreichen der für eine Übermittlung und einen Erhalt einer Rückantwort bzw. Empfangsbestätigung erforderlichen Zeit für den Fall, daß von einer bestimmten Nebenstelle keine Empfangsbestätigung erhalten wird, eine neuerliche Übermittlung der Botschaft bzw. Nachricht Ma an die spezielle Nebenstelle erfolgt, um den zuverlässigen Empfang sicherzustellen.

Aus der schematischen Darstellung von Fig. 3 ist somit ersichtlich, daß gegebenenfalls unterschiedliche Nachrichten an unterschiedliche Empfangsstationen 12 zeitversetzt und verschachtelt zu Zeitpunkten T0, T1, T2, ... übermittelt werden können, so daß die für den Einsatz im Zusammenhang mit der Übermittlung von Datenpaketen bzw. Alarmierungspaketen für Alarmierungseinsätze, Rettungseinsätze etc. insbesondere zur Aufrechterhaltung der öffentlichen Ordnung und Sicherheit erforderlichen, kurzen Alarmierungszeiten und entsprechende Empfangszeiten sichergestellt werden können.

## Patentansprüche

1. Verfahren zum Erstellen und Versenden wenigstens eines Datenpakets, insbesondere Alarmierungspakets, zwischen einer zentralen Stelle (11) und einer Mehrzahl von damit über Funkverbindungen kommunizierenden Nebenstellen (12) unter Einsatz eines mehrlagigen bzw. -schichtigen Modells, wobei in einer Funkverbindungsschicht (2) das wenigstens eine zu übermittelnde Datenpaket in einem Rahmen (6) mit zusätzlichen Daten, wie Typ, Protokoll ID, Sequenzzähler, Zieladresse und Quelladresse eingebettet wird, **dadurch gekennzeichnet, daß** eine Übermittlung des Datenpakets in dem Rahmen (6) auf einer ersten Frequenz (fa) erfolgt, während eine Bestätigung bzw. Mitteilung von der (den) Nebenstelle(n) zu der zentralen Stelle auf einer von der ersten Frequenz verschiedenen Frequenz (fb) erfolgt.

2. Verfahren nach Anspruch 1, **dadurch gekennzeichnet, daß** das zu übermittelnde Datenpaket von einer vorangehenden Schicht (1) für eine physikalische Datenübertragung zur Verfügung gestellt wird.

3. Verfahren nach Anspruch 1 oder 2, **dadurch gekennzeichnet, daß** das in den Rahmen (6) eingebettete Datenpaket gemeinsam mit den Zusatzdaten entsprechend der Protokoll ID einer nachfolgenden Schicht (3) zur Übertragung an mit der zentrale Stelle (11) kommunizierende Nebenstellen (12) weitergeleitet wird.

4. Verfahren nach Anspruch 1, 2 oder 3, **dadurch gekennzeichnet, daß** von den Nebenstellen (12) eine Empfangsbestätigung nach Erhalt eines in einem Rahmen (6) eingebetteten Datenpakets gefordert wird.

5. Verfahren nach einem der Ansprüche 1 bis 4, **dadurch gekennzeichnet, daß** das wenigstens eine Datenpaket an sämtliche mit der zentralen Stelle (11) kommunizierenden Nebenstellen (12) versandt wird und entsprechend der im Rahmen (6) angegebenen Zieladresse lediglich die durch die Zieladresse bestimmte Nebenstelle (12) eine Empfangsbestätigung an die zentrale Stelle (11) retourniert oder von dieser angefordert wird.

6. Verfahren nach einem der Ansprüche 1 bis 5, **dadurch gekennzeichnet, daß** für die Abgabe einer Empfangsbestätigung durch die durch die Zieladresse bestimmte Nebenstelle (12) eine Verzögerungszeit für die Absendung der Empfangsbestätigung nach Erhalt des das Datenpaket enthaltenden Rahmens (6) eingestellt wird.

7. Verfahren nach einem der Ansprüche 1 bis 6, **dadurch gekennzeichnet, daß** eine Übermittlung eines weiteren, in einen Rahmen (6) eingebetteten Datenpakets für eine durch die Zieladresse bestimmte Nebenstelle (12) erst nach Erhalt einer Empfangsbestätigung einer vorangehenden Übermittlung eines in einem Rahmen (6) eingebetteten Datenpakets vorgenommen wird.

8. Verfahren nach einem der Ansprüche 1 bis 7, **dadurch gekennzeichnet, daß** bei Nichteinlangen einer Empfangsbestätigung von einer Nebenstelle (12) in einem vorgegebenen Zeitraum eine neuerliche Übermittlung des in einem Rahmen (6) eingebetteten Datenpakets an diese Nebenstelle (12) vorgenommen wird.

9. Verfahren nach einem der Ansprüche 1 bis 8, **dadurch gekennzeichnet, daß** eine Statusanfrage von der zentralen Stelle (11) an die damit kommunizierenden Nebenstellen (12) gesandt wird.

10. Verwendung eines Verfahrens nach einem der Ansprüche 1 bis 9 im Zusammenhang mit einer Übermittlung von Datenpaketen für Alarmierungseinsätze, Rettungseinsätze etc., insbesondere zur Aufrechterhaltung der öffentlichen Ordnung und Sicherheit.
